# EUROPEAN PATENT APPLICATION

(11) **EP 2 028 907 A1**
(43) Date of publication of application: **25.02.2009**
(21) Application number: 07016383.7
(22) Date of filing: 21.08.2007
(51) Int. Cl.: H04W 72/08

(54) **Method and apparatus for forwarding of condensed information about a user equipment between base stations**

(71) Applicant: Nokia Siemens Networks Oy, 02610 Espoo (FI)
(72) Inventor: Breuer, Volker, Dr., 16727 Bötzow (DE); Martos-Riano, Demian, 10115 Berlin (DE); Ulrich, Thomas, 67098 Bad Dürkheim (DE)
(74) Representative: Bruglachner, Thomas E.

(57) **Abstract**

lt is described a method for forwarding information on a User Equipment from a first base station to a second base station (120) of a cellular telecommunication network. The described method comprises acquiring information on a User Equipment, the information comprising measurement values obtained by measurements procedures performed by the User Equipment, providing the acquired information to the first base station, deriving condensed information based on the provided information and forwarding the condensed information from the first base station to the second base station. The step of deriving condensed information may comprise performing a statistical analysis of the provided information. lt is further described a base station, which, in combination with the User Equipment and a second base station is adopted for performing the described condensed information forwarding method.

## Description

### Field of invention

The present invention relates to the field of cellular telecommunication networks. Specifically, the present invention relates to a method for forwarding information on a User Equipment from a first base station to a second base station of a cellular telecommunication network, in particular from a first eNodeB to a second eNodeB of a Long Term Evolution network. Further, the present invention relates to a base station for a cellular telecommunication network, which is designed in such a manner, that the described information forwarding method can be carried out.

### Art Background

Long Term Evolution (LTE) is the name given to a project within the Third Generation Partnership Project (3GPP) to improve the Universal Mobile Telecommunications System (UMTS) mobile phone standard to cope with future requirements. Goals include improving efficiency, lowering costs, improving services, making use of new spectrum opportunities, and better integration with other open standards.

LTE networks rely on Orthogonal Frequency Division Multiplexing (OFDM) as well as on Multiple-Input Multiple-Output (MIMO) antenna technologies. Based on these technologies it should be possible for cellular phone network providers to handle much more users (approximately ten time more users than UMTS) and to support not only speech data but also services such as interactive applications including high speed data transfer and Internet Protocol Television (IPTV).

The architecture of LTE networks is characterized by the fact that no central base station controller manages the handovers of a cellular mobile phone between cells being assigned to different base stations. A base station in a LTE network is called evolved NodeB (eNodeB). With a LTE cellular network the eNodeB potentially in conjugation with the cellular mobile phone decides to handover a call to a cell of another eNodeB. In the following a cellular mobile phone will also be called a User Equipment (UE).

Since the decision of the individual eNodeB for initiating a handover is based on data, which are acquired on the scope of the individual eNodeB, the individual eNodeB is not able to detect, whether the UE is travelling from cell to cell with only short resident times in each cell. Thereby, the term scope of the individual eNodeB refers both to the spatial respectively the geographical scope and to the temporal scope of the eNodeB.

As a consequence of the decentral network topology having no central base station controller, the mobility of a UE between different eNodeB of a LTE network, which mobility relies on an error-free handover of the UE, requires a forwarding of corresponding information, which was collected about or from a particular UE between neighbouring eNodeBs. Since the connection between neighbouring eNodeB of a LTE network is established by means of a standardized X2 interface, this information should be transmitted via the X2 interface.

The information, which is supposed to be transmitted between different eNodeB, which may be involved in a UE handover, should contain a history information concerning the UE. This history should include information about for instance the recent movement of the UE, which has already travelled from one cell to another cell. The UE history information can be collected by the UE itself by performing appropriate measurements. In addition, information on UE can be collected by measurements or performance-counters in eNodeB. Both types of measurements can be collected and stored in the eNodeB. This means that the history information comprises measurement values which have been collected by the UE and by eNodeB in the past.

A decentral transfer of history information may have the disadvantage, that the amount of data, which has to be transferred via an X2 interface, is quite high.

There may be a need for providing an effective method for forwarding information on a User Equipment from a first base station to a second base station of a cellular telecommunication network. Further, there may be a need for providing a base station for a cellular telecommunication network, which base station is suitable for performing the above described information forwarding method.

### Summary of the Invention

This need may be met by the subject matter according to the independent claims. Advantageous embodiments of the present invention are described by the dependent claims.

According to a first aspect of the invention there is provided a method for forwarding information on a User Equipment from a first base station to a second base station of a cellular telecommunication network, in particular from a first eNodeB to a second eNodeB of a Long Term Evolution network. The provided method comprises (a) acquiring information on a User Equipment, the information comprising measurement values obtained by measurements procedures performed by the User Equipment, by the first base station and/or by any other base station formerly visited by the User Equipment, (b) providing the acquired information to the first base station, (c) deriving condensed information based on the provided information and (d) forwarding the condensed information from the first base station to the second base station.

This first aspect of the invention is based on the idea that that the decentral data traffic between different base stations in particular of a decentralized Long Term Evolution (LTE) network can be reduced significantly by forwarding only relevant measurement information. Thereby, the first base station is capable of deriving significant information on the User Equipment (UE). This significant information may represent a relevant subset of the originally acquired respectively measured information on the UE. Generally speaking, the forwarded information represents values being derived from measurements procedures of the UE instead of forwarding the original measurement values respectively the measurement values as such.

The measurement carried out by the UE may be any known measurement which can be performed by a UE. For instance the measurement variable may be the signal strength of a signal being transmitted and/or received between the UE and different base stations being assigned to one or more telecommunication networks. Further, the measurement value may be represented by the quality of a transmission channel between the UE and different base stations of one or more cellular telecommunication networks. Further, the measurement value may represent an activity time, an average number of required retransmissions and/or a data throughput at a particular instance in time.

The measurement carried out by the eNodeB may be any known measurement which can be performed by an eNodeB. For instance the measurement variable may be the signal strength of a signal being transmitted and/or received between the UE and different base stations being assigned to one or more telecommunication networks. Further, the measurement value may be represented by the quality of a transmission channel between the UE and different base stations of one or more cellular telecommunication networks. Further, the measurement value may represent an activity time, an average number of required retransmissions and/or a data throughput at a particular instance in time.

The condensed information may be understood as a measurement report representing a summary of the relevant measurement values. Preferably, this summary only comprises relevant measurement values of the UE. In other words, the forwarded information can be interpreted as a summarizing respectively a condensed history about the results of previous measurement procedures carried out by a certain UE.

According to an embodiment of the invention the step of deriving condensed information comprises performing a statistical analysis of the provided information. Thereby, known statistical procedures may be exploited for extracting the significant information from the plurality of original measurement values representing the acquired information on the UE and in particular on the UE history.

Such statistical procedures may include the determination of an average measurement value of a plurality of original measurement values, which have been collected respectively acquired by means a predetermined number of past measurements. Further, the statistical procedures may include the determination of an extreme value such as a maximum and/or a minimum value from a plurality of already acquired measurement values.

According to a further embodiment of the invention the step of deriving condensed information comprises calculating the second and/or the third derivative of the provided information. Thereby, the term "derivative" can be interpreted in a mathematical and/or in a non-mathematical term.

Derivative in a mathematical term means the calculation of the derivative preferably in time of a certain measurement value, which has been acquired by means of several already finished measurements. For instance the derivative can be the temporal gradient of one or more original measurement values. Derivative in a non mathematical term may mean any other relationship between the original measurement values and the condensed information such as the variance or an autocorrelation of a plurality of already acquired measurement values.

According to a further embodiment of the invention the step of deriving condensed information is carried out during a time span the first base station is serving the User Equipment. This may provide the advantage that when the UE is handed over from the first base station to the second base station the generation of condensed information may already be finished such that the forwarding of the condensed information may be started without any delay.

According to a further embodiment of the invention the step of forwarding the condensed information is carried out during a handover preparation for the User Equipment from the first base station to the second base station. This may provide the advantage that the condensed information can be used for influencing the handover decision. For instance if the condensed information reveals that for the UE handovers between different base stations have been performed very frequently beforehand, a handover to an overlaying macro cell of the cellular telecommunication network may be accomplished. Thereby, an altered handover-threshold value may be used for adapting the handover procedure for the UE.

According to a further embodiment of the invention the condensed information is forwarded via an X2 interface. This may provide the advantage that in case the above described method is carried out within an LTE network, a standardized interface between eNodeBs, which interface already exists, can be employed. This means that the described method can be realized in known telecommunication networks without having the need to modify the corresponding network architecture. Of course, in case an X2 interface is used, the structure of the data record will have to comply with the standardized X2 requirements.

According to a further embodiment of the invention the way how the condensed information is derived from the provided information is defined by an X2 protocol of the X2 interface. This may provide the advantage that it can be explicitly defined beforehand in a standardized manner which information on measurement or observation variables of the UE shall be forwarded to the second base station. Further, a relevant time span can be determined which defines the measurement times of the measurement values which are supposed to be taken into account for deriving the condensed information. Furthermore, the number of previously serving base stations can be defined, which are assigned to the measurement values which are considered as to be relevant.

It has to be mentioned that if the X2 interface is not in operation and the condensed information has to be transferred via known S1 interfaces between different base stations also the S1 protocol of the S1 interface may be used for defining the way how the condensed information is derived.

According to a further aspect of the invention the described method further comprises exchanging information between the first base station and a further base station. Thereby, (a) the exchanged information is used for assisting the first base station to derive the condensed information and/or (b) the exchanged information represents the condensed information.

This may provide the advantage that the described method can also be carried out in case the first base station is not able to serve a certain condensing procedure. Thereby, the involved base stations might negotiate between each other in order to provide the first base station with sufficient information such that the first base station will be able to forward the condensed information on the User Equipment to the second base station.

According to a further embodiment of the invention the way how the condensed information is derived from the provided information is exchanged between the first base station and the second base station when the connection between the first base station and the second base station is established. This may provide the advantage that the information what type of measurement values respectively what kind of condensed information is forwarded from the first to the second base station has only been transferred once.

Preferably, this information is transferred when an X2 interface between the two involved base stations is established for the first time. As a consequence, the way how the condensed information is derived may be the same for all UE, which are handed over from the first to the second base station. The way how the condensed information is derived may then serve as a default way for all UE.

It has to be mentioned that alternatively there may be used a request at each UE handover individually or in combination of default and individual configuration in order to define the way how the condensed information is derived.

According to a further aspect of the invention there is provided a first base station for a cellular telecommunication network, which base station is adapted for forwarding information on a User Equipment to a second base station of the cellular telecommunication network. The provided base station comprises (a) a receiving unit, which is adapted for receiving acquired information on a User Equipment, which information comprises measurement values obtained by measurements procedures performed by the User Equipment, by a measurement unit of the first base station and/or by a measurement unit of any other base station formerly visited by the User Equipment, (b) a processor unit, which is adapted for deriving condensed information based on the provided information, and (c) a transmission unit, which is adapted for forwarding the condensed information from the first base station to the second base station.

This aspect of the invention is based on the idea that the provided base station can be used for carrying out the above described information forwarding method in an effective way.

By employing the provided base station a decentral data traffic between different base stations in particular of a decentralized LTE network can be reduced significantly by forwarding only relevant measurement information. This means that only significant information for a certain UE may be forwarded. This significant information may represent a relevant subset of the originally acquired respectively measured information on the UE.

Generally speaking, the forwarded information represents values being derived from measurements procedures of the UE instead of forwarding the original measurement values respectively the measurement values as such. The forwarded information can be interpreted as a summarizing respectively a condensed history about the results of measurement procedures carried out previously.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered to be disclosed with this application.

The aspects defined above and further aspects of the present invention are apparent from the example of embodiment to be described hereinafter and are explained with reference to the example of embodiment. The invention will be described in more detail hereinafter with reference to examples of embodiment but to which the invention is not limited.

### Brief Description of the Drawings

The only Figure illustrates a forwarding of a condensed measurement history information about a User Equipment from a first base station to a second base station.

### Detailed Description

The illustration in the drawing is schematically.

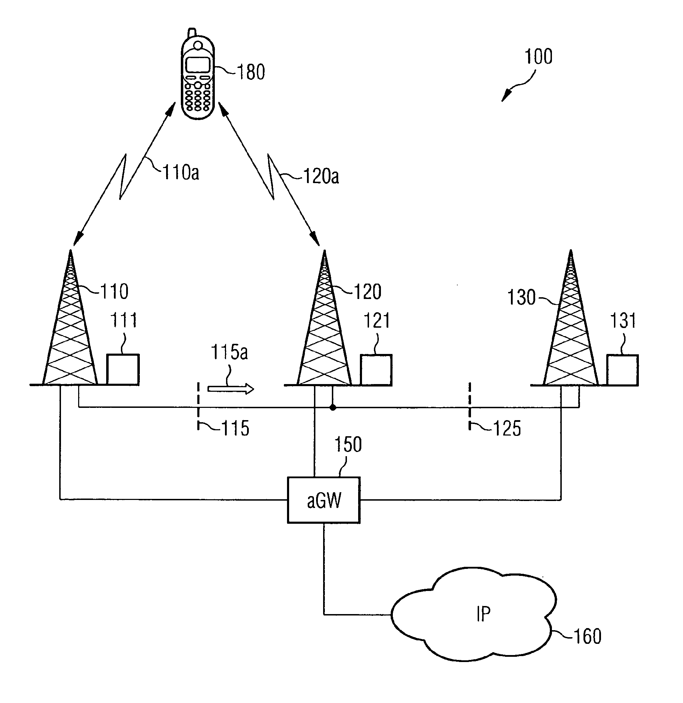

Figure 1 shows a Long Term Evolution (LTE) network 100 comprising a plurality of base stations, wherein only a first eNodeB 110, a second eNodeB 120 and a third eNodeB 130 are depicted. Neighbouring eNodeBs 110, 120 and 120, 130 are connected with each other via a standardized X2 interface 115 and 125, respectively.

The base stations 110, 120 and 130 are further connected to an access gateway 150. User data between a User Equipment (UE) 180 and a further UE (not depicted) are transferred via an access Gateway (aGW) 150 and via an IP based network 160. According to the embodiment described here the UE 180 is a cellular mobile phone. However, it has to be mentioned that the UE 180 may also be any type of communication terminal such as a Personal Digital Assistant (PDA), a Notebook computer and/or any other movable communication device.

The UE 180 is initially connected to the first eNodeB 110 via a first connection respectively a first transmission path 110a. At that time the second eNodeB 120 is not yet involved in the communication between the UE 180 and the not depicted further UE.

During operation the UE 180 performs a plurality of measurement procedures. These measurement procedures are carried out in order to put the UE 180 in an appropriate configuration. This means that for instance the UE 180 regularly checks whether there are other base stations accessible. Thereby, the UE 180 might search for accessible base stations of the LTE network 100 or of other cellular communication networks such as for instance a Universal Mobile Telecommunications System (UMTS) and/or a Global System for Mobile Communications (GSM) network. When searching for other accessible base stations the measurement variable may be the signal strength of a signal being transmitted and/or received between the UE and a corresponding foreign base station.

The measurement data respectively the measurement values, which have been acquired by the UE 110, are transferred from the UE 110 to the first eNodeB 110. A processor unit 111, which is assigned to the first eNodeB 110 receives the acquired measurement data and derives condensed information from the full set of acquired respectively transferred measurement data. Thereby, known statistical procedures may be exploited for extracting the condensed information from the plurality of original measurement values representing the acquired information about the UE 180. Such statistical procedures may include the determination of an average measurement value of a plurality of original measurement values, which have been collected respectively acquired by means a predetermined number of past measurements. Further, the statistical procedures may include the determination of an extreme value such as a maximum and/or a minimum value from a plurality of already acquired measurement values.

Since the UE 180 has acquired the original measurement values within an already elapsed time period, these measurement values represent a measurement history about the configuration of the UE 180. Accordingly, the condensed information represents a condensed measurement history comprising only the most relevant data respectively significant data, which may be based on at least some of the original measurement history data.

During a handover of the UE 180 from the first eNodeB 110 to the second eNodeB 120, wherein a second connection via a second transmission path 120a is established and the first connection via the first transmission path 110a is terminated, the condensed information is transferred from the first eNodeB 110 to the second eNodeB 120 via the X2 interface 115. This forwarding is indicated by the arrow denominated with reference numeral 115a.

According to the embodiment described here, the step of deriving the condensed information is carried out during a time span wherein the first base station is serving the User Equipment. This may provide the advantage that, when the UE 180 is handed over from the first eNodeB 110 to the second eNodeB 120, the generation of condensed information may already be finished such that the forwarding of the condensed information may be started without any delay.

The forwarding of the condensed information is carried out during a handover preparation for the UE 180 from the first eNodeB 110 to the second eNodeB 120. This provides the possibility that the condensed information can be used for influencing the handover decision. For instance if the condensed information reveals that for the UE 180 handovers between different eNodeBs have been performed very frequently beforehand, a handover to a not depicted overlaying macro cell of the cellular LTE telecommunication network 100 may be accomplished.

By forwarding only the relevant measurement information the data traffic between the first eNodeB 110 and the second eNodeB 120 can be reduced. Thereby, the relevant measurement information may represent a relevant subset of the originally acquired respectively measured information about the UE 180. Since in a modern LTE network a plurality of handovers have to be managed, the overall data traffic can be reduced significantly.

It has to be mentioned that the described forwarding of condensed measurement information can also be carried out between the second eNodeB 120 and the third eNodeB 130. Thereby, a processor unit 121 being assigned to the second eNodeB 120 is used for deriving the updated condensed information based on (a) the previous condensed information, which has been forwarded from the first eNodeB 110 to the second eNodeB 120 and (b) original measurement data, which have been acquired during the time the UE 180 has been served by the second eNodeB 120. Accordingly, a processor unit 131 being assigned to the third eNodeB 130 may be used for deriving condensed measurement information, which is supposed to be forwarded to a further not depicted eNodeB of the LTE communication network 100.

It has to be further mentioned that the invention is not limited to a telecommunication network, which interacts with an IP based network. The invention can rather be realized by means of any other network.

It should be noted that the term "comprising" does not exclude other elements or steps and the "a" or "an" does not exclude a plurality. It should also be noted that reference signs in the claims should not be construed as limiting the scope of the claims.

### List of reference signs:

- 100: LTE telecommunication network
- 110: first base station / first eNodeB
- 110a: first connection / first transmission path
- 111: processor unit
- 115: X2 interface
- 115a: forwarding UE history
- 120: second base station / second eNodeB
- 120a: second connection / second transmission path
- 121: processor unit
- 125: X2 interface
- 130: third base station / third eNodeB
- 131: processor unit
- 150: access Gateway
- 160: IP based network
- 180: User Equipment / mobile phone

## Claims

1. A method for forwarding information on a User Equipment (180) from a first base station (110) to a second base station (120) of a cellular telecommunication network (100), in particular from a first eNodeB (110) to a second eNodeB (120) of a Long Term Evolution network (100), the method comprising
• acquiring information on a User Equipment (180), the information comprising measurement values obtained by measurements procedures performed by the User Equipment (180), by the first base station (110) and/or by any other base station formerly visited by the User Equipment (180),
• providing the acquired information to the first base station (110),
• deriving condensed information based on the provided information and
• forwarding the condensed information from the first base station (110) to the second base station (120).

2. The method as set forth in claim 1, wherein
deriving condensed information comprises
performing a statistical analysis of the provided information.

3. The method as set forth in any one of the claims 1 to 2, wherein
deriving condensed information comprises
calculating the second and/or the third derivative of the provided information.

4. The method as set forth in any one of the claims 1 to 3, wherein
deriving condensed information is carried out during a time span the first base station (110) is serving the User Equipment (180).

5. The method as set forth in any one of the claims 1 to 4, wherein
forwarding the condensed information is carried out during a handover preparation for the User Equipment (180) from the first base station (110) to the second base station (120).

6. The method as set forth in any one of the claims 1 to 5, wherein the condensed information is forwarded via an X2 interface (115).

7. The method as set forth in claim 6, wherein the way how the condensed information is derived from the provided information is defined by an X2 protocol of the X2 interface (115).

8. The method as set forth in any one of the claims 1 to 7, further comprising
• exchanging information between the first base station (110) and a further base station (120, 130),
wherein
- the exchanged information is used for assisting the first base station to derive the condensed information and/or
- the exchanged information represents the condensed information.

9. The method as set forth in any one of the claims 1 to 8, wherein
the way how the condensed information is derived from the provided information is exchanged between the first base station (110) and the second base station (110) when the connection between the first base station (110) and the second base station (120) is established.

10. A first base station for a cellular telecommunication network (100), the base station (110) being adapted for forwarding information on a User Equipment (180) to a second base station (120) of the cellular telecommunication network (100), the first base station (110) comprising
• a receiving unit, which is adapted for receiving acquired information on a User Equipment (180), which information comprises measurement values obtained by measurements procedures performed by the User Equipment (180), by a measurement unit of the first base station (110) and/or by a measurement unit of any other base station formerly visited by the User Equipment (180),
• a processor unit, which is adapted for deriving condensed information based on the provided information, and
• a transmission unit, which is adapted for forwarding the condensed information from the first base station (110) to the second base station (120).
